(19) Europäisches Patentamt
European Patent Office
Office européen des brevets

(11) **EP 1 932 935 A1**

(12) **EUROPÄISCHE PATENTANMELDUNG**

(43) Veröffentlichungstag:
**18.06.2008 Patentblatt 2008/25**

(21) Anmeldenummer: **06025146.9**

(22) Anmeldetag: **05.12.2006**

(51) Int Cl.:
*C23C 4/08* (2006.01)     *C23C 28/00* (2006.01)
*C23C 30/00* (2006.01)     *F01D 25/00* (2006.01)
*F01D 5/28* (2006.01)

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK RS**

(71) Anmelder: **SIEMENS AKTIENGESELLSCHAFT**
**80333 München (DE)**

(72) Erfinder: **Stamm, Werner, Dr.**
**45481 Mühlheim a.d. Ruhr (DE)**

(54) **Verfahren zur Herstellung einer Turbinenschaufel mit einem Oxid auf einer metallischen Schicht, eine Turbineschaufel, Verwendung einer solchen Turbinenschaufel und ein Verfahren zum Betreiben einer Turbine**

(57) MCrAlX-Schichten werden nach dem Stand der Technik eingesetzt, um Turbinenschaufeln vor Oxidation oder Korrosion zu schützen.

Erfindungsgemäß werden die MCrAlX-Schichten bei gegenüber der Einsatztemperatur erhöhten Temperaturen behandelt, so dass das Oxidation- und Korrosionsverhalten verbessert ist.

FIG 1

EP 1 932 935 A1

**Beschreibung**

Die Erfindung betrifft ein Verfahren zur Herstellung einer Turbinenschaufel mit einer oxidierten metallischen Schicht, eine Verwendung einer solchen Turbinenschaufel, eine Turbine und ein Verfahren zum Betreiben einer Turbine.

Turbinenschaufeln werden mit Schutzschichten, z.B. bestehend aus MCrAlX, versehen, um sie gegen Korrosion und/oder Oxidation zu schützen. Dies sind metallische Schichten, auf denen sich eine schützende Oxidschicht bildet.

Oft sind die sich bildenden Oxidschichten nicht ausreichend für einen Schutz.

Es ist daher Aufgabe der Erfindung oben genanntes Problem zu überwinden.

Die Aufgabe wird gelöst durch ein Verfahren gemäß Anspruch 1, eine Verwendung gemäß Anspruch 15, eine Turbine gemäß Anspruch 17 und durch ein Verfahren zum Betreiben einer Turbine gemäß Anspruch 21.

In den jeweiligen Unteransprüchen sind weitere vorteilhafte Maßnahmen aufgelistet, die in vorteilhafter Art und Weise miteinander kombiniert werden können.

Die Erfindung wird im Folgenden erläutert.

Es zeigen:

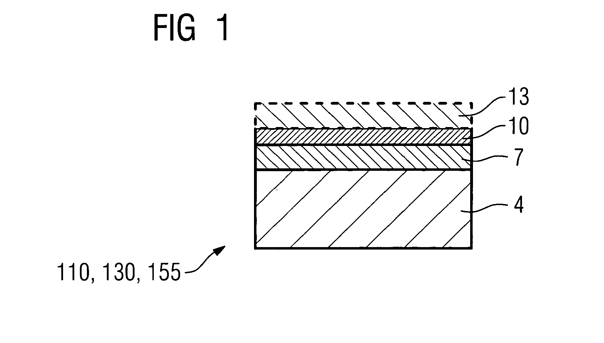

Figur 1    ein Schichtsystem,
Figur 2    eine Gasturbine,
Figur 3    perspektivisch eine Turbinenschaufel,
Figur 4    perspektivisch eine Brennkammer und
Figur 5    eine Liste von Superlegierungen.

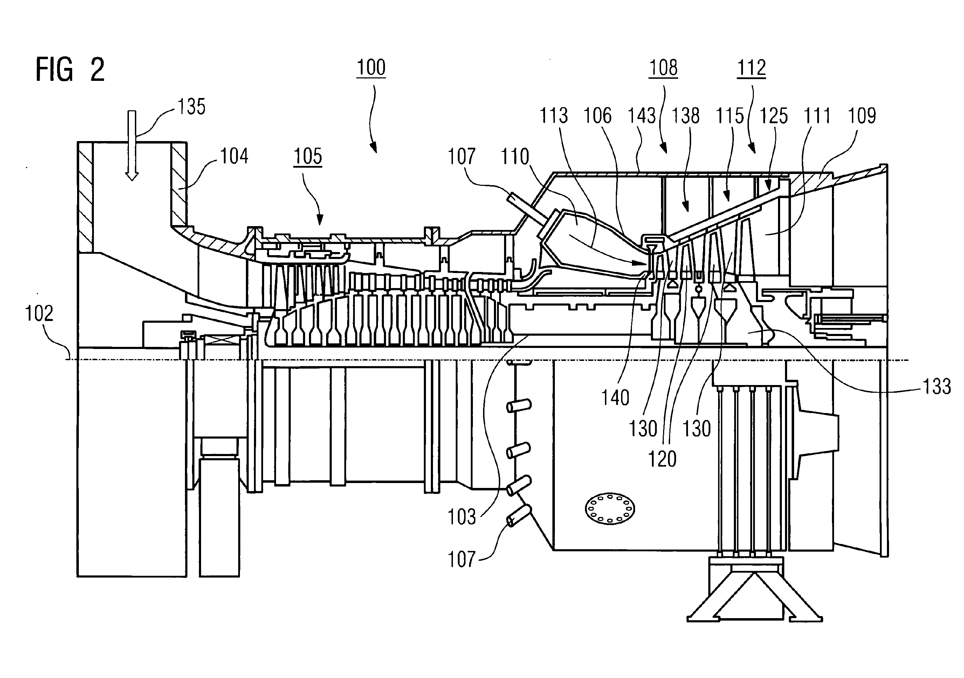

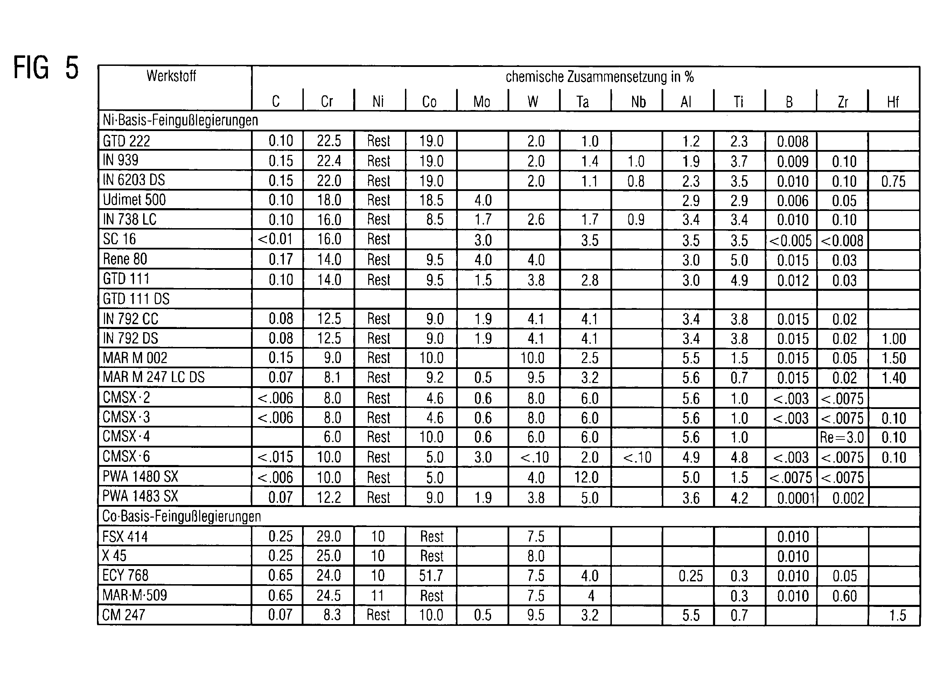

Auf ein metallisches Substrat 4, das insbesondere bei Bauteilen für Gasturbinen für Flugzeuge, für Verdichter oder für Gasturbinen 100 (Fig. 2) zur Stromerzeugung eine nickel- oder kobaltbasierte Superlegierung (Figur 5) darstellt, wird eine metallische Schutzschicht 7 aufgebracht. Diese metallische Schutzschicht 7 ist insbesondere eine Legierung des Typs MCrAlX.

Eine solche beschichtete Turbinenschaufel 120, 130 wird dann in die Gasturbine 100 eines Flugzeugs oder für eine stationäre Anwendung eingebaut, die während des Einsatzes oxidiert. Die Temperaturen, die die Turbinenschaufel 120, 130 im Einsatz in einer dritten oder vierten Stufe einer Gasturbine 100 erfährt, liegen vorzugsweise bei 900°C bis 950°C.

Die Turbine 100 weist im Turbinenbereich vorzugsweise vier Stufen aus Leit- 130 und Laufschaufeln 120 auf, wobei zumindest in der ersten Reihe, d.h. den Leit- 130 und Laufschaufeln 120, auf den Turbinenschaufeln 120, 130 eine keramische Wärmedämmschicht 13 aufgebracht ist. Insbesondere hat die Turbine 100 nur vier Stufen.

Erfindungsgemäß wird die metallische Schicht 7 vor dem Einsatz oxidiert und zwar bei Temperaturen, die oberhalb der Einsatztemperatur liegen, insbesondere um mindestens 50°C, vorzugsweise um 50°C, d. h. in diesem Fall bei 950°C bis 1000°C. Durch die Anwendung erhöhter Temperaturen bildet sich in dem Fall der MCrAlX-Schichten ein stabiles $\alpha$-Aluminiumoxid aus, die sich bei niedrigeren Einsatztemperaturen nicht ausbilden würde. Die dabei gebildete $\alpha$-Aluminiumoxidschicht 10 zeigt den besten Antioxidationsschutz. Ist erst mal eine $\alpha$-$Al_2O_3$-Schicht gebildet, so diese auch bei niedrigeren Temperaturen weiter.

Die Oxidation der metallischen Schicht 7 wird vorzugsweise in reduzierter Sauerstoffatmosphäre durchgeführt. Dazu kann vorzugsweise die Oxidation in Stickstoff, Argon oder Helium oder in einem Schutzgasgemisch stattfinden. Ebenso kann bestimmter Wasserdampfdruck eingestellt werden, um die gewünschte Aluminiumoxidphase zu erreichen. Der Sauerstoffpartialdruck liegt vorzugsweise bei $10^{-7}$ bar - $10^{-15}$ bar.

Auch wenn diese metallische Schicht 7 nicht als Over-Lay-Schicht verwendet wird, wie bei der dritten oder vierten Stufe einer stationären Gasturbine 100, kann das Verfahren auch angewendet werden, wenn eine äußere keramische Schicht 13 (für die erste und/oder zweite Schaufelreihe) aufgebracht wird, wenn die Temperaturen, die die metallische Schicht 7 unterhalb einer keramischen Wärmedämmschicht 13 erfährt, unter der Temperatur liegen, die notwendig ist, um das gewünschte Oxid zu bilden.

Vorzugsweise wird das Verfahren mit folgenden MCrAlX-Beschichtungen (hier X = Y) durchgeführt:

```
Co-(27 - 29)Ni-(23 - 25)Cr-(9 - 11)Al-(0.5 - 0.7)Y,
```

insbesondere Co-28Ni-24Cr-10A1-0,6Y,
insbesondere mit Silizium (Si)
oder

$$Ni-(11 - 13)Co-(20 - 22)Cr-(10 - 12)Al-(0.3 - 0.5)Y-(1.5 - 2.5)Re,$$

insbesondere Ni-12Co-21Cr-11Al-0,4Y-2Re
oder

$$Ni-(24 - 26)Co-(16 - 18)Cr- (9 - 11)Al-(0.3 - 0.5)Y-(1.0 - 2.0)Re,$$

insbesondere Ni-25Co-17Cr-10Al-0,4Y-1,5Re
oder

$$Co-(29 - 31)Ni-(27 - 29)Cr-(7 - 9)Al-(0.5-0.7)Y-(0.6 - 0.8)Si,$$

insbesondere Co-30NI-28Cr-8Al-0.6Y-0.7Si.

Vorzugsweise besteht die Schicht 7 aus einer der oben genannten Legierungen.

Die Figur 2 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

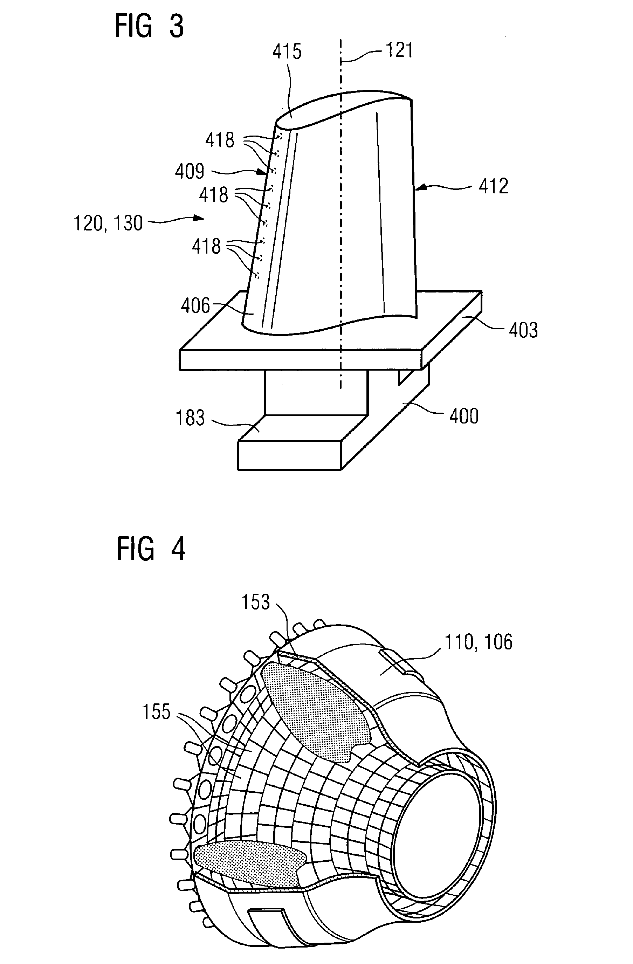

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer), vorzugsweise durch das erfindungsgemäße Verfahren

Auf der MCrAlX kann noch eine Wärmedämmschicht vorhanden sein, die vorzugsweise die äußerste Schicht ist, und besteht beispielsweise aus $ZrO_2$, $Y_2O_3$-$ZrO_2$, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/ oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen. Diese Schutzschicht wird erfindungsgemäß behandelt.

Auf der MCrAlX kann noch eine beispielsweise keramische Wärmedämmschicht vorhanden sein und besteht beispielsweise aus $ZrO_2$, $Y_2O_3$-$ZrO_2$, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

**Patentansprüche**

1. Verfahren zur Herstellung eines Bauteils (120, 130, 155), das ein Substrat (4) mit einer metallischen Schicht (7) aufweist,
   wobei die metallische Schicht (7) eine Oxidschicht ausbilden kann,
   **dadurch gekennzeichnet, dass**
   die metallische Schicht (7) bei einer Temperatur oxidiert wird,
   die um mindestens 50°C gegenüber der späteren Einsatztemperatur der metallischen Schicht erhöht ist, insbesondere um 50°C.

2. Verfahren nach Anspruch 1,
   bei dem die Temperatur zur Oxidbildung bei 950°C bis 1150°C,
   insbesondere bei 950°C bis 1050°C,
   liegt.

3. Verfahren nach Anspruch 1,
   bei dem die Temperatur zur Oxidbildung bei 1000°C liegt.

4. Verfahren nach Anspruch 1,

bei dem die metallische Schicht (7) eine Legierung des Typs MCrAIX,
insbesondere des Typs NiCoCrAIX,
aufweist
und insbesondere daraus besteht.

5. Verfahren nach Anspruch 4,
bei der die NiCoCrAIX-Legierung eine Zusammensetzung aufweist (in wt%) :

```
Co-(27 - 29)Ni-(23 - 25)Cr-(9 - 11)Al-(0.5 - 0.7)Y,
```

insbesondere Co-28Ni-24Cr-10Al-Y,
insbesondere mit Silizium (Si),
insbesondere bestehend aus

```
Co-(27 - 29)Ni-(23 - 25)Cr-(9 - 11)Al-(0.5 - 0.7)Y,
```

insbesondere bestehend aus Co-28Ni-24Cr-10Al-Y, insbesondere mit Silizium (Si).

6. Verfahren nach Anspruch 4,
bei der die NiCoCrAIX-Legierung eine Zusammensetzung aufweist (in wt%) :

```
Ni-(11 - 13)Co-(20 - 22)Cr-(10 - 12)Al-(0.3 - 0.5)Y-(1.5 -
2.5)Re,
```

insbesondere Ni-12Co-21Cr-11Al-Y-Re,
insbesondere bestehend aus

```
Ni-(11 - 13)Co-(20 - 22)Cr-(10 - 12)Al-(0.3 - 0.5)Y-(1.5 -
2.5)Re,
```

insbesondere bestehend aus Ni-12Co-21Cr-11Al-Y-Re.

7. Verfahren nach Anspruch 4,
bei der die NiCoCrAIX-Legierung eine Zusammensetzung aufweist (in wt%) :

```
Ni-(24 - 26)Co-(16 - 18)Cr-(9 - 11)Al-(0.3 - 0.5)Y-(1.0 -
2.0)Re,
```

insbesondere Ni-25Co-17Cr-10Al-Y-Re,
insbesondere bestehend aus

```
Ni-(24 - 26)Co-(16 - 18)Cr-(9 - 11)Al-(0.3 - 0.5)Y-(1.0 -
2.0)Re,
```

insbesondere bestehend aus Ni-25Co-17Cr-10Al-Y-Re.

8. Verfahren nach Anspruch 4,
bei der die NiCoCrAlY-Legierung eine Zusammensetzung aufweist (in wt%) :

```
Co-(29 - 31)Ni-(27 - 29)Cr-(7 - 9)Al-(10.5-0.7)Y-(0.6 -
0.8)Si,
```

insbesondere Co-30Ni-28Cr-8Al-Y-Si,
insbesondere bestehend aus

```
Co-(29 - 31)Ni-(27 - 29)Cr-(7 - 9)Al-(10.5-0.7)Y-(0.6 -
0.8)Si,
```

insbesondere bestehend aus Co-30Ni-28Cr-8Al-Y-Si.

9. Verfahren nach Anspruch 1, 2, 3, 4, 5, 6, 7 oder 8,
bei dem eine keramische Wärmedämmschicht (13) auf die metallische Schicht (7) aufgebracht wird.

10. Verfahren nach Anspruch 1, 2, 3, 4, 5, 6, 7 oder 8,
bei dem keine keramische Wärmedämmschicht auf die metallische Schicht (7) aufgebracht wird.

11. Verfahren nach Anspruch 1,
bei dem die Oxidation der metallischen Schicht (7) im Vakuum oder mit einem Sauerstoffpartialdruck deutlich kleiner als in Luft durchgeführt wird.

12. Verfahren nach Anspruch 11,
bei dem die Oxidation in einem Schutzgas durchgeführt wird,
insbesondere in Stickstoff, Argon und/oder Helium.

13. Verfahren nach Anspruch 11 oder 12,
bei dem ein Wasserdampf während der Oxidation verwendet wird.

14. Verfahren nach Anspruch 11,
bei dem der Sauerstoffpartialdruck zwischen $10^{-7}$ bar bis $10^{-15}$ bar liegt.

15. Verwendung eines Bauteils (120, 130),
hergestellt nach einem oder mehreren der Ansprüche 1 bis 14,
als Turbinenschaufel für die dritte und/oder vierte Stufe einer Gasturbine (100).

16. Verwendung nach Anspruch 15,
wobei die Schaufeln (120, 130) der dritten und/oder vierten Stufe keine keramische Wärmedämmschicht aufweist.

17. Turbine (100),
die aus einem Kompressor, einer Brennkammer (110) und einem Turbinenbereich besteht,
bei der die Beschichtungen der Schaufeln (120, 130) der dritten und vierten Stufe des Turbinenbereichs vor dem Einbau oxidiert sind,
insbesondere nach einem Verfahren gemäß der Ansprüche 1 bis 14 hergestellt sind.

18. Turbine nach Anspruch 17,
die im Turbinenbereich vier Schaufelreihen aufweist, insbesondere im Turbinenbereich aus vier Schaufelreihen besteht,
wobei eine Schaufelreihe aus einer Scheibe mit Leit- (130) und einer Scheibe mit Laufschaufeln (120) besteht.

19. Turbine nach Anspruch 17 oder 18,
wobei zumindest die erste Schaufelreihe der Turbinenschaufeln (120, 130),

insbesondere die erste und zweite Schaufelreihe eine keramische Wärmedämmschicht (13) aufweisen.

20. Turbine nach Anspruch 17, 18 oder 19,
bei der die Schaufeln (120, 130) der dritten und vierten Stufe keine keramische Wärmedämmschicht aufweisen.

21. Verfahren zum Betreiben einer Turbine (100),
die Turbinenschaufeln (120, 130) mit einer oxidierten Schicht (7) aufweist,
die insbesondere nach einem Verfahren nach einem oder mehreren der Ansprüche 1 bis 14 hergestellt sind,
bei dem die Einsatztemperatur der Turbinenschaufel (120, 130) um mindestens 50°C niedriger liegt als die Temperatur,
bei der die Oxidschicht auf dieser Turbinenschaufel (120, 130) gebildet wurde.

22. Verfahren nach Anspruch 21,
bei dem in der dritten und/oder vierten Stufe einer Turbine (100) Turbinenschaufeln (120, 130) mit einer oxidierten metallischen Schicht (7) verwendet werden.

FIG 1

13
10
7
4

110, 130, 155

FIG 2

EP 1 932 935 A1

## FIG 3

## FIG 4

**FIG 5**

EP 1 932 935 A1

| Werkstoff | chemische Zusammensetzung in % | | | | | | | | | | | | |
|---|---|---|---|---|---|---|---|---|---|---|---|---|---|
| | C | Cr | Ni | Co | Mo | W | Ta | Nb | Al | Ti | B | Zr | Hf |
| Ni-Basis-Feingußlegierungen | | | | | | | | | | | | | |
| GTD 222 | 0.10 | 22.5 | Rest | 19.0 | | 2.0 | 1.0 | | 1.2 | 2.3 | 0.008 | | |
| IN 939 | 0.15 | 22.4 | Rest | 19.0 | | 2.0 | 1.4 | 1.0 | 1.9 | 3.7 | 0.009 | 0.10 | |
| IN 6203 DS | 0.15 | 22.0 | Rest | 19.0 | | 2.0 | 1.1 | 0.8 | 2.3 | 3.5 | 0.010 | 0.10 | 0.75 |
| Udimet 500 | 0.10 | 18.0 | Rest | 18.5 | 4.0 | | | | 2.9 | 2.9 | 0.006 | 0.05 | |
| IN 738 LC | 0.10 | 16.0 | Rest | 8.5 | 1.7 | 2.6 | 1.7 | 0.9 | 3.4 | 3.4 | 0.010 | 0.10 | |
| SC 16 | <0.01 | 16.0 | Rest | | 3.0 | | 3.5 | | 3.5 | 3.5 | <0.005 | <0.008 | |
| Rene 80 | 0.17 | 14.0 | Rest | 9.5 | 4.0 | 4.0 | | | 3.0 | 5.0 | 0.015 | 0.03 | |
| GTD 111 | 0.10 | 14.0 | Rest | 9.5 | 1.5 | 3.8 | 2.8 | | 3.0 | 4.9 | 0.012 | 0.03 | |
| GTD 111 DS | | | | | | | | | | | | | |
| IN 792 CC | 0.08 | 12.5 | Rest | 9.0 | 1.9 | 4.1 | 4.1 | | 3.4 | 3.8 | 0.015 | 0.02 | |
| IN 792 DS | 0.08 | 12.5 | Rest | 9.0 | 1.9 | 4.1 | 4.1 | | 3.4 | 3.8 | 0.015 | 0.02 | 1.00 |
| MAR M 002 | 0.15 | 9.0 | Rest | 10.0 | | 10.0 | 2.5 | | 5.5 | 1.5 | 0.015 | 0.05 | 1.50 |
| MAR M 247 LC DS | 0.07 | 8.1 | Rest | 9.2 | 0.5 | 9.5 | 3.2 | | 5.6 | 0.7 | 0.015 | 0.02 | 1.40 |
| CMSX·2 | <.006 | 8.0 | Rest | 4.6 | 0.6 | 8.0 | 6.0 | | 5.6 | 1.0 | <.003 | <.0075 | |
| CMSX·3 | <.006 | 8.0 | Rest | 4.6 | 0.6 | 8.0 | 6.0 | | 5.6 | 1.0 | <.003 | <.0075 | 0.10 |
| CMSX·4 | | 6.0 | Rest | 10.0 | 0.6 | 6.0 | 6.0 | | 5.6 | 1.0 | | Re=3.0 | 0.10 |
| CMSX·6 | <.015 | 10.0 | Rest | 5.0 | 3.0 | <.10 | 2.0 | <.10 | 4.9 | 4.8 | <.003 | <.0075 | 0.10 |
| PWA 1480 SX | <.006 | 10.0 | Rest | 5.0 | | 4.0 | 12.0 | | 5.0 | 1.5 | <.0075 | <.0075 | |
| PWA 1483 SX | 0.07 | 12.2 | Rest | 9.0 | 1.9 | 3.8 | 5.0 | | 3.6 | 4.2 | 0.0001 | 0.002 | |
| Co-Basis-Feingußlegierungen | | | | | | | | | | | | | |
| FSX 414 | 0.25 | 29.0 | 10 | Rest | | 7.5 | | | | | 0.010 | | |
| X 45 | 0.25 | 25.0 | 10 | Rest | | 8.0 | | | | | 0.010 | | |
| ECY 768 | 0.65 | 24.0 | 10 | 51.7 | | 7.5 | 4.0 | | 0.25 | 0.3 | 0.010 | 0.05 | |
| MAR·M·509 | 0.65 | 24.5 | 11 | Rest | | 7.5 | 4 | | | 0.3 | 0.010 | 0.60 | |
| CM 247 | 0.07 | 8.3 | Rest | 10.0 | 0.5 | 9.5 | 3.2 | | 5.5 | 0.7 | | | 1.5 |

**Europäisches Patentamt**

**EUROPÄISCHER RECHERCHENBERICHT**

Nummer der Anmeldung

EP 06 02 5146

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 273 681 A2 (GEN ELECTRIC [US]) 8. Januar 2003 (2003-01-08) * Absätze [0003], [0008], [0009], [0012], [0016], [0021], [0024] * ----- | 1-3,9-22 | INV. C23C4/08 C23C28/00 C23C30/00 F01D25/00 F01D5/28 |
| X | US 4 414 249 A (ULION NICHOLAS E [US] ET AL) 8. November 1983 (1983-11-08) * Spalte 1 - Spalte 2 * * Spalte 4 * * Spalte 5, Zeilen 10-28 * * Spalte 6, Zeilen 34-41 * ----- | 1-22 | |
| X | EP 1 127 959 A (HOWMET RES CORP [US]) 29. August 2001 (2001-08-29) * Absätze [0001], [0009], [0010], [0021], [0032], [0033], [0037] * * Anspruch 10 * ----- | 1-3,9-22 | |
| X | EP 1 600 518 A2 (GEN ELECTRIC [US]) 30. November 2005 (2005-11-30) * Absätze [0013] - [0019] * ----- | 1-3,9-22 | RECHERCHIERTE SACHGEBIETE (IPC) |
| X | US 5 856 027 A (MURPHY KENNETH S [US]) 5. Januar 1999 (1999-01-05) * Spalten 3,4 * * Spalte 7, Zeilen 22-34 * ----- | 1-3,9-22 | C23C F01D |

Der vorliegende Recherchenbericht wurde für alle Patentansprüche erstellt

| Recherchenort | Abschlußdatum der Recherche | Prüfer |
|---|---|---|
| München | 7. Februar 2007 | Brown, Andrew |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................................
& : Mitglied der gleichen Patentfamilie, übereinstimmendes Dokument

# EP 1 932 935 A1

## ANHANG ZUM EUROPÄISCHEN RECHERCHENBERICHT
## ÜBER DIE EUROPÄISCHE PATENTANMELDUNG NR.

EP 06 02 5146

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-02-2007

| Im Recherchenbericht angeführtes Patentdokument | | Datum der Veröffentlichung | Mitglied(er) der Patentfamilie | | Datum der Veröffentlichung |
|---|---|---|---|---|---|
| EP 1273681 | A2 | 08-01-2003 | US | 2003203221 A1 | 30-10-2003 |
| | | | US | 2005147840 A1 | 07-07-2005 |
| US 4414249 | A | 08-11-1983 | KEINE | | |
| EP 1127959 | A | 29-08-2001 | JP | 2001295076 A | 26-10-2001 |
| | | | US | 2003022012 A1 | 30-01-2003 |
| | | | US | 6472018 B1 | 29-10-2002 |
| EP 1600518 | A2 | 30-11-2005 | JP | 2005350771 A | 22-12-2005 |
| | | | US | 2005266266 A1 | 01-12-2005 |
| US 5856027 | A | 05-01-1999 | DE | 69603108 D1 | 12-08-1999 |
| | | | DE | 69603108 T2 | 20-01-2000 |
| | | | EP | 0733723 A1 | 25-09-1996 |
| | | | JP | 8260128 A | 08-10-1996 |
| | | | US | 5716720 A | 10-02-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1204776 B1
- EP 1306454 A
- EP 1319729 A1
- WO 9967435 A
- WO 0044949 A
- US 6024792 A
- EP 0892090 A1
- EP 0486489 B1
- EP 0786017 B1
- EP 0412397 B1
- EP 1306454 A1